# EUROPÄISCHE PATENTSCHRIFT

(11) **EP 2 892 641 B1**
(45) Veröffentlichungstag und Bekanntmachung des Hinweises auf die Patenterteilung: **02.11.2016**
(21) Anmeldenummer: 13759699.5
(22) Anmeldetag: 03.09.2013
(51) Int. Cl.: B01J 8/00

(54) **BELADEVORRICHTUNG FÜR KATALYSATOREN**
LOADING DEVICE
DISPOSITIF DE CHARGEMENT

(30) Priorität: 10.09.2012 DE 102012017785
(43) Veröffentlichungstag der Anmeldung: 15.07.2015
(73) Patentinhaber: ThyssenKrupp Industrial Solutions AG, 45143 Essen (DE)
(72) Erfinder: HERBST, Julian, 44892 Bochum (DE); PORZ, Lutz Oliver, 44139 Dortmund (DE); MICHEL, Reinhard, 44797 Bochum (DE); JOHANNING, Joachim, 46045 Oberhausen (DE); VÖLKER, Günter, 48149 Münster (DE); RENVOICE, Peter, Middlesbrough TS9 6LL, Cleveland (GB); MARIGO, Michele, Durham DH1 4AS (GB)
(74) Vertreter: ThyssenKrupp Intellectual Property GmbH
(86) Internationale Anmeldenummer: PCT/EP2013/068180
(87) Internationale Veröffentlichungsnummer: WO 2014/037346

(56) Entgegenhaltungen:
- EP-B1- 1 687 223
- DE-A1- 19 634 455
- GB-A- 2 287 016
- US-A- 5 819 820

## Beschreibung

Die vorliegende Erfindung betrifft ein Verfahren zum Befüllen von Ammoniak-Synthesereaktoren sowie die hierfür zum Einsatz kommenden Befüllvorrichtungen.

Typischerweise setzt man für die Produktion von Ammoniak in den nach dem Haber-Bosch-Verfahren arbeitenden Syntheseanlagen Ammoniakreaktoren ein, die je nach Synthesekonzept bis zu drei Katalysatorbetten enthalten. Die Reaktoren bestehen aus zylindrischen Druckbehältern und verhältnismäßig aufwendigen Innenkonstruktionen, den Konvertereinsätzen, zur Aufnahme der Katalysatorbetten und gegebenenfalls Wärmeüberträger. Wegen des hohen Druckniveaus der Synthese von üblicherweise über 200 bar werden die Durchmesser der Druckbehälter möglichst klein gehalten und die Katalysatorbetten entlang der Behälterachsen untereinander angeordnet. Diese Anordnung hat zur Folge, dass die Zugänglichkeit der weiter vom Apparatedeckel entfernten Katalysatorbetten deutlich eingeschränkt ist und die Befüllung mit dem Katalysatormaterial erschwert wird.

Bedingt durch die unterschiedlichen Anlagenkapazitäten und verfahrenstechnischen Gegebenheiten haben die Katalysatorbetten sehr verschiedene Abmessungen. Wegen der Effizienz bezüglich der Baugröße und des Druckverlustes ist heute die radiale Bauweise vorherrschend, d.h. die Katalysatorbetten haben die Gestalt von Hohlzylindern und werden in radialer Richtung durchströmt.

Bei kontinuierlichem, sogenanntem "Hose-Loading", bei dem die Reaktorbetten über einen oder mehrere Schläuche mit Katalysator befüllt werden, werden nur durchschnittliche Schüttdichten unterhalb des geforderten Wertes für die Synthesereaktion erreicht. Daher werden bisher die Katalysatorbetten im diskontinuierlichen Schichtladeverfahren gefüllt, das heißt Katalysatorschichten von 250-300 mm werden mit einem Schlauch eingefüllt und anschließend mittels Betonrüttlern und Vibratoren auf die erforderliche Schüttdichte von mindestens 2,8 kg/l oxidiertem Katalysator, bzw. 2,3 kg/l bei vorreduzierten, also spezifisch leichteren Katalysatoren verdichtet. Das Vibrieren einer Schicht kann je nach Bettgeometrie über eine Stunde dauern.

Diese Vorgehensweise ist bei der Erstbefüllung für Neuanlagen vertretbar, da die Arbeiten während der Inbetriebnahmevorbereitung stattfinden und nicht auf dem terminkritischen Pfad liegen, also nicht zu teuren Produktionsausfällen führen.

Bei einem Katalysatorwechsel finden sich die Katalysatorwechselarbeiten jedoch meist auf dem zeitkritischen Pfad und können für die Länge des Stillstandes ausschlaggebend sein. Für übliche Katalysator enthaltende Behälter ist es in solchen Fällen üblich, mit dem sogenannten "Dense Loading"-Verfahren die angestrebte Schüttdichte in einem kontinuierlichen Beladungsverfahren ohne zwischengeschalteten Verdichtungsschritt zu bewirken, dabei kann der Katalysator entsprechend schneller eingefüllt werden.

Phänomenologisch kann der Unterschied in den erreichbaren Schüttdichten zwischen Hose-Loading und Dense-Loading damit erklärt werden, dass beim Hose-Loading viele Partikeln in kurzer Zeit auf eine kleine Fläche fallen, wobei sich die Partikel bei der Anordnung in eine dichte Packungsstruktur gegenseitig behindern, wogegen beim Dense-Loading viele Partikeln in kurzer Zeit auf eine größere Fläche fallen, wodurch die Partikeln genug Platz und Zeit haben sich in eine dichtere Packungsstruktur anzuordnen.

Aus dem Stand der Technik sind eine große Zahl von Systemen und Verfahren zum Dense-Loading bekannt. Beispielsweise beschreibt die US 2010/0019952 A1, bei dem in einem Katalysatorbehälter oberseitig ein sich drehendes Verteilsystem angeordnet wird, das die herabfallenden Katalysatorpartikel gleichmäßig über den Querschnitt der Reaktorfläche verteilt, wobei das Verteilsystem oben fixiert ist. In der EP 1 152 967 B1 wird ein ähnliches System beschrieben, bei dem sich die Umdrehungsgeschwindigkeit des sich drehenden Verteilsystems derart angepasst wird, dass mit steigendem Höhenstand der Schüttung die Partikel noch in den Außenbereich der Schüttung geschleudert werden können, ohne jedoch an der Behälterwand anzuprallen.

In der US 5,687,780 wird ein System beschrieben, bei dem ebenfalls in einem Katalysatorbehälter oberseitig ein sich drehendes Verteilsystem angeordnet wird, das die herabfallenden Katalysatorpartikel gleichmäßig über den Querschnitt der Reaktorfläche verteilt, bei dem sich das System aber axial verschieben lässt, was die Fallhöhe der Partikel verringert. In der EP 1 687 223 B1 wird ein solches System beschrieben, welches zusätzlich mit Gasstrahlen arbeitet, welche das sich drehende Verteilsystem antreiben und die Bahnen der Partikel mit beeinflussen.

In der GB 2 287 016 A wird ein System beschrieben, welches ebenfalls in einem Katalysatorbehälter oberseitig angeordnet wird, das die herabfallenden Katalysatorpartikel gleichmäßig über den Querschnitt der Reaktorfläche verteilt, und bei dem sich das System auch im Reaktor absenken und positionieren lässt. Das System ist nicht drehbar und weist in verschiedene Winkel abstehende Flügel auf, die die flächige Verteilung der Partikel bewirken.

Diese genannten und auch alle weiteren aus dem Stand der Technik bekannten Dense-Loading-Beladesysteme sind in den radial durchströmten Ammoniak-Synthesereaktoren nicht verwendbar, da weder ein oberseitiger Zugang besteht, noch die radial durchströmten Reaktoren zentral entlang ihrer Symmetrieachse überhaupt befüllbar sind, da sie in radialer Richtung beidseitig von Gitterkonstruktionen begrenzt werden. Konstruktive Details engen ferner die Freiräume innerhalb der Betten ein und erschweren somit die Zugänglichkeit für die Beladungssysteme. Gleichzeitig ist es gerade bei radial durchströmten Reaktoren besonders wichtig, dass die Partikel im Betrieb nicht nachrutschen können, da sonst Kurzschlussströmungen im oberen Bereich der radialen Schüttung entstehen würden.

Der Erfindung liegt daher die technische Aufgabe zugrunde, eine konstruktiv einfache Vorrichtung bereitzustellen, bei der die oben beschriebenen Nachteile nicht auftreten, und mit der in möglichst kurzer Zeit das Verfahren des Katalysator-Dense-Loading in einem Reaktor mit einem oder mehreren radial durchströmten Katalysatorbetten durchgeführt werden kann.

Die Aufgabe der Erfindung wird gelöst durch eine Beladevorrichtung,
- aufweisend N um N/360° versetzte Beladeköpfe, wobei N die Zahl 3 oder ein ganzzahliges Vielfaches davon ist,
- wobei jeder der N Beladeköpfe eine am oberen Ende angeordnete Anschlussvorrichtung für einen Schlauch aufweist, über den Katalysatormaterial von oben gefördert werden kann,
- wobei jeder der N Beladeköpfe unterhalb der Anschlussvorrichtung einen mit der Spitze nach oben gerichteten und mit der Anschlussvorrichtung verbundenen Ablenkkonus aufweist,
- an diesem Ablenkkonus unterseitig eine senkrechte Haltevorrichtung befestigt ist,
- an der senkrechten Haltevorrichtung mindestens 2 kreisförmige Ablenktrichterelemente mittels waagerechter Streben befestigt sind,
- die Ablenktrichterelemente oben enger als unten öffnen,
- zwischen den Ablenktrichterelementen Abstände vorgesehen sind,
- und die unteren Ablenktrichterelemente einen größeren Durchmesser aufweisen als die darüber liegenden Ablenktrichterelemente.

In einer bevorzugten Ausgestaltung der Erfindung sind Ablenkkonus und Ablenktrichterelemente so angeordnet, dass sie sich an eine umhüllende Fläche anlegen, die einen Kreiskonus mit einem Öffnungswinkel von 45° bis 90°, besonders bevorzugt 60°, aufweist.

In einer weiteren Ausgestaltung der Erfindung werden jeweils genau drei Ablenktrichterelemente untereinander angeordnet.

In einer weiteren Ausgestaltung der Erfindung werden drei Beladeköpfe um 120° versetzt an einem Beladering fixiert. Dieser wird vorzugsweise um die Reaktorachse drehbar angeordnet. In einer bevorzugten Ausgestaltung ist dieser Beladering vertikal verschiebbar und besitzt eine lösbare Arretierung im Reaktor, die es erlaubt, ihn im laufenden Betrieb im Reaktor zu belassen.

Die Aufgabe der Erfindung wird auch durch ein Beladeverfahren gelöst, wobei die Beladeköpfe während der Beladung von oben gesehen abschnittsweise auf einer Kreisbahn tangential hin und her geschwenkt werden.

In einer Ausgestaltung des Verfahrens wird vorgesehen, dass die Beladeköpfe auf ein Höhenniveau knapp oberhalb des Katalysatorbetts abgesenkt und dann entsprechend der Füllhöhe axial aufwärts bewegt werden.

In einer Ausgestaltung des Verfahrens wird vorgesehen, dass die tangentiale Schwenkbewegungen und die axiale Aufwärtsbewegung durch die Bewegung des Beladerings gesteuert und durchgeführt werden.

Die Erfindung wird nachfolgend anhand von zwei Skizzen näher erläutert. Hierbei zeigen
Fig. 1 eine Seitenansicht eines Beladekopfes und
Fig. 2 eine Schrägansicht eines Beladerings mit drei Beladeköpfen.

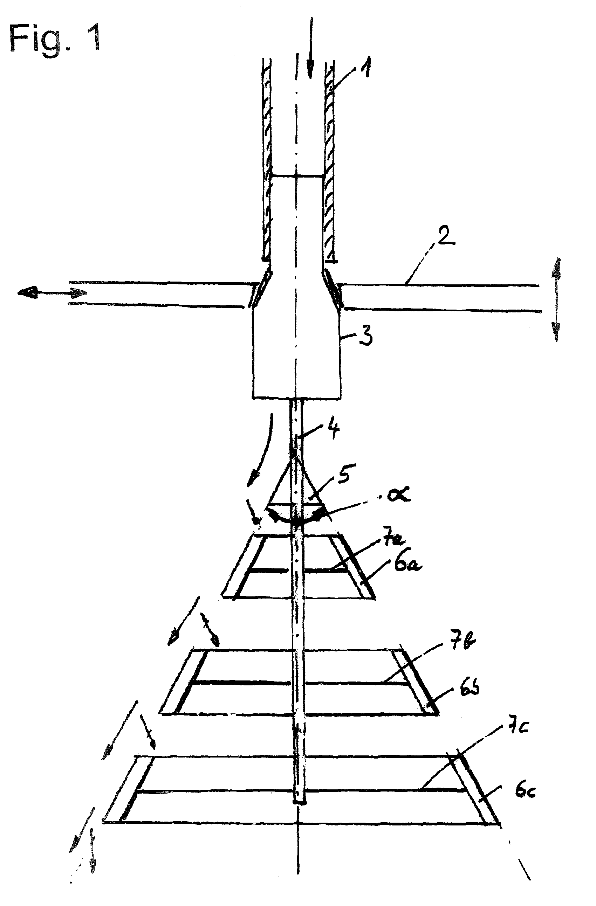

Fig. 1 zeigt einen Schlauch 1, in dem das Katalysatormaterial gefördert wird, wobei pneumatische Förderung oder Schwerkraftförderung möglich sind. Der Schlauch 1 ist an der Anschlussvorrichtung 3 befestigt, die auch mit dem Beladering 2 verbunden ist. An der Anschlussvorrichtung 3 ist auch die Haltevorrichtung 4 befestigt, die den Ablenkkonus 5 trägt sowie die drei Ablenktrichterelemente 6a, 6b und 6c mittels der Haltestäbe 7a, 7b und 7c. Ablenkkonus und Ablenktrichterelemente weisen einen Öffnungswinkel α (alpha) auf. Die Pfeile am Ablenktrichter zeigen die Flussrichtung der Katalysatorpartikel, die Pfeile am Beladering 2 deuten die Bewegungsrichtungen an.

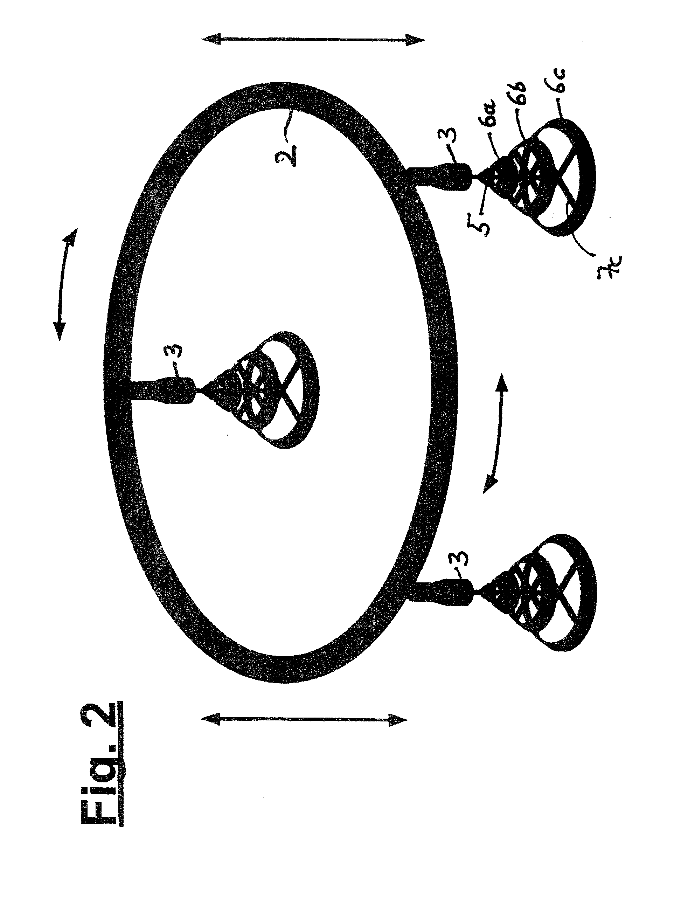

Fig. 2 zeigt eine Schrägdarstellung mit dem Beladering 2 und drei Beladeköpfen, deren Bezugsziffern denen in Fig. 1 entsprechen.

### Bezugszeichenliste:

- 1: Schlauch
- 2: Beladering
- 3: Anschlussvorrichtung
- 4: Haltevorrichtung
- 5: Ablenkkonus
- 6a, b, c: Ablenktrichterelemente
- 7a, b, c: Haltestäbe
- α: Öffnungswinkel

## Patentansprüche

1. Beladevorrichtung, aufweisend N um N/360° versetzte Beladeköpfe, wobei N die Zahl 3 oder ein ganzzahliges Vielfaches davon ist,
- wobei jeder der N Beladeköpfe eine am oberen Ende angeordnete Anschlussvorrichtung für einen Schlauch (1) aufweist, über den Katalysatormaterial von oben gefördert werden kann,
- wobei jeder der N Beladeköpfe unterhalb der Anschlussvorrichtung einen mit der Spitze nach oben gerichteten und mit der Anschlussvorrichtung verbundenen Ablenkkonus (5) aufweist,
- an diesem Ablenkkonus (5) unterseitig eine senkrechte Haltevorrichtung befestigt ist,
- an der senkrechten Haltevorrichtung (3) mindestens zwei kreisförmige Ablenktrichterelemente (6) mittels waagerechter Streben (7) befestigt sind,
- die Ablenktrichterelemente (6) oben enger als unten öffnen,
- zwischen den Ablenktrichterelementen (6) Abstände vorgesehen sind,
- und die unteren Ablenktrichterelemente (6) einen größeren Durchmesser aufweisen als die darüber liegenden Ablenktrichterelemente (6).

2. Beladevorrichtung nach Anspruch 1,
**dadurch gekennzeichnet,**
**dass** Ablenkkonus (5) und Ablenktrichterelemente (6) so angeordnet sind, dass sie sich an eine umhüllende Fläche anlegen, die einen Kreiskonus mit einem Öffnungswinkel von 45° bis 90°, besonders bevorzugt 60°, aufweist.

3. Beladevorrichtung nach einem der Ansprüche 1 oder 2,
**dadurch gekennzeichnet,**
**dass** jeweils genau drei Ablenktrichterelemente (6) untereinander angeordnet sind.

4. Beladevorrichtung nach einem der Ansprüche 1 bis 3,
**dadurch gekennzeichnet,**
**dass** drei Beladeköpfe um 120° versetzt an einem Beladering (2) fixiert sind.

5. Beladevorrichtung nach Anspruch 4,
**dadurch gekennzeichnet,**
**dass** der Beladering (2) um die Reaktorachse drehbar angeordnet ist.

6. Beladevorrichtung nach Anspruch 4,
**dadurch gekennzeichnet,**
**dass** der Beladering (2) vertikal verschiebbar ist.

7. Beladevorrichtung nach Anspruch 4,
**dadurch gekennzeichnet,**
**dass** der Beladering (2) eine lösbare Arretierung im Reaktor besitzt, die es erlaubt, ihn im laufenden Betrieb im Reaktor zu belassen.

8. Beladeverfahren unter Verwendung einer Beladevorrichtung gemäß einem der Ansprüche 1 bis 7,
**dadurch gekennzeichnet,**
**dass** die Beladeköpfe während der Beladung, von oben gesehen, abschnittsweise auf einer Kreisbahn tangential hin und her geschwenkt werden.

9. Beladeverfahren nach Anspruch 8,
**dadurch gekennzeichnet,**
**dass** die Beladeköpfe auf ein Höhenniveau knapp oberhalb des Katalysatorbetts abgesenkt und dann entsprechend der Füllhöhe axial aufwärts bewegt werden.

10. Beladeverfahren nach einem der Ansprüche 8 oder 9,
**dadurch gekennzeichnet,**
**dass** die tangentialen Schwenkbewegungen und die axiale Aufwärtsbewegung durch die Bewegung des Beladerings gesteuert und durchgeführt werden.

## Claims

1. Loading device, having N loading heads that are offset through N/360°, wherein N is the number 3 or an integral multiple thereof,
- wherein each of the N loading heads has a connection device, arranged at the upper end, for a hose (1) via which catalyst material can be conveyed from above,
- wherein each of the N loading heads has, beneath the connection device, a deflecting cone (5) of which the tip is directed upward and which is connected to the connection device,
- a vertical holding device is fastened to the underside of this deflecting cone (5),
- at least two circular deflecting funnel elements (6) are fastened to the vertical holding device (3) by means of horizontal struts (7),
- the deflecting funnel elements (6) open more narrowly at the top than at the bottom,
- gaps are provided between the deflecting funnel elements (6),
- and the lower deflecting funnel elements (6) have a larger diameter than the deflecting funnel elements (6) located thereabove.

2. Loading device according to Claim 1,
**characterized**
**in that** the deflecting cone (5) and deflecting funnel elements (6) are arranged such that they are in contact with an envelope surface which has a circular cone with an opening angle of 45° to 90°, particularly preferably 60°.

3. Loading device according to either of Claims 1 and 2,
**characterized**
**in that** in each case exactly three deflecting funnel elements (6) are arranged one beneath another.

4. Loading device according to one of Claims 1 to 3,
**characterized**
**in that** three loading heads are fixed to a loading ring (2) in a manner offset through 120°.

5. Loading device according to Claim 4,
**characterized**
**in that** the loading ring (2) is arranged so as to be rotatable about the reactor axis.

6. Loading device according to Claim 4,
**characterized**
**in that** the loading ring (2) is vertically displaceable.

7. Loading device according to Claim 4,
**characterized**
**in that** the loading ring (2) has a releasable locking mechanism in the reactor, said locking mechanism making it possible to leave said loading ring (2) in the reactor during operation.

8. Loading method using a loading device according to one of Claims 1 to 7,
**characterized**
**in that** the loading heads are pivoted tangentially back and forth sectionally on a circular path, as seen from above, during loading.

9. Loading method according to Claim 8,
**characterized**
**in that** the loading heads are lowered to a level just above the catalyst bed and then moved axially upward in accordance with the filling level.

10. Loading method according to either of Claims 8 and 9,
**characterized**
**in that** the tangential pivoting movements and the axial upward movement are controlled and carried out by the movement of the loading ring.

## Revendications

1. Dispositif de chargement, présentant N têtes de chargement décalées de N/360°, N étant le nombre 3 ou un multiple entier de celui-ci,
- chacune des N têtes de chargement présentant un dispositif de raccordement disposé à l'extrémité supérieure pour un tuyau (1) par le biais duquel un matériau catalyseur peut être transporté depuis le haut,
- chacune des N têtes de chargement présentant, en dessous du dispositif de raccordement, un cône de déviation (5) avec sa pointe orientée vers le haut et connecté au dispositif de raccordement,
- un dispositif de retenue vertical étant fixé au niveau du côté inférieur à ce cône de déviation (5),
- au moins deux éléments d'entonnoir de déviation (6), de forme circulaire, étant fixés au moyen d'entretoises horizontales (7) au dispositif de retenue vertical (3),
- les éléments d'entonnoir de déviation (6) s'ouvrant de manière plus étroite en haut qu'en bas,
- des espacements étant prévus entre les éléments d'entonnoir de déviation (6),
- et les éléments d'entonnoir de déviation inférieurs (6) présentant un plus grand diamètre que les éléments d'entonnoir de déviation situés au-dessus (6).

2. Dispositif de chargement selon la revendication 1,
**caractérisé en ce que**
le cône de déviation (5) et les éléments d'entonnoir de déviation (6) sont disposés de telle sorte qu'ils s'appliquent contre une surface d'enveloppe qui présente un cône circulaire avec un angle d'ouverture de 45° à 90°, particulièrement préférablement de 60°.

3. Dispositif de chargement selon l'une quelconque des revendications 1 ou 2,
**caractérisé en ce qu'**
à chaque fois exactement trois éléments d'entonnoir de déviation (6) sont disposés les uns en dessous des autres.

4. Dispositif de chargement selon l'une quelconque des revendications 1 à 3,
**caractérisé en ce que**
trois têtes de chargement sont fixées de manière décalée de 120° à un anneau de chargement (2).

5. Dispositif de chargement selon la revendication 4,
**caractérisé en ce que**
l'anneau de chargement (2) est disposé de manière à pouvoir tourner autour de l'axe du réacteur.

6. Dispositif de chargement selon la revendication 4,
**caractérisé en ce que**
l'anneau de chargement (2) peut être déplacé verticalement.

7. Dispositif de chargement selon la revendication 4,
**caractérisé en ce que**
l'anneau de chargement (2) possède une fixation amovible dans le réacteur qui permet de le laisser dans le réacteur pendant le fonctionnement.

8. Procédé de chargement utilisant un dispositif de chargement selon l'une quelconque des revendications 1 à 7,
**caractérisé en ce que**
les têtes de chargement, pendant le chargement, vues de dessus, sont pivotées en partie tangentiellement d'avant en arrière sur une piste circulaire.

9. Procédé de chargement selon la revendication 8,
**caractérisé en ce que**
les têtes de chargement sont abaissées à un niveau en hauteur juste au-dessus du lit de catalyseur et sont ensuite déplacées axialement vers le haut de manière correspondant à la hauteur de remplissage.

10. Procédé de chargement selon l'une quelconque des revendications 8 ou 9,
**caractérisé en ce que**
les mouvements de pivotement tangentiels et les mouvements de montée axiaux sont commandés et effectués par le mouvement de l'anneau de chargement.
